# EUROPÄISCHE PATENTSCHRIFT

(11) **EP 0 598 789 B1**
(45) Veröffentlichungstag und Bekanntmachung des Hinweises auf die Patenterteilung: **17.01.1996**
(21) Anmeldenummer: 92917098.3
(22) Anmeldetag: 13.08.1992
(51) Int. Cl.: G21C 17/028

(54) **VERFAHREN UND VORRICHTUNG ZUR GEWINNUNG VON PROBEN AUS DER ATMOSPHÄRE IN EINEM GASDICHT ABGESCHLOSSENEN BEHÄLTER, INSBESONDERE AUS DEM REAKTORSICHERHEITSBEHÄLTER EINES KERNKRAFTWERKS**
PROCESS AND DEVICE FOR OBTAINING SAMPLES FROM THE ATMOSPHERE IN A CLOSED GASTIGHT CONTAINER, ESPECIALLY FROM THE REACTOR SAFETY VESSEL OF A NUCLEAR POWER STATION
PROCEDE ET DISPOSITIF POUR LE PRELEVEMENT D'ECHANTILLONS DANS L'ATMOSPHERE D'UN RESERVOIR FERME ETANCHE AUX GAZ, EN PARTICULIER D'UN RESERVOIR DE SECURITE D'UN REACTEUR D'UNE CENTRALE NUCLEAIRE

(30) Priorität: 14.08.1991 DE 4126894
(43) Veröffentlichungstag der Anmeldung: 01.06.1994
(73) Patentinhaber: SIEMENS AKTIENGESELLSCHAFT, D-80333 München (DE)
(72) Erfinder: ECKARDT, Bernd, D-6454 Bruchköbel (DE)
(86) Internationale Anmeldenummer: DE9200679
(87) Internationale Veröffentlichungsnummer: WO9304482

(56) Entgegenhaltungen:
- EP-A- 0 285 845
- EP-A- 0 338 324
- EP-A- 0 419 994
- EP-A- 0 498 016
- FR-A- 2 152 170
- US-A- 4 863 677
- ATOMPRAXIS Bd. 11, Nr. 4, April 1965, KARLSRUHE DE, Seiten 185-191; VON H. BRAUN: "Gasprobeentnahme für den gasgekühlten Hochtemperaturreaktor von BBC/Krupp"
- PATENT ABSTRACTS OF JAPAN vol. 6, no. 159 (P-136)(1037) 20. August 1982 & JP-A-57 077 942
- PATENT ABSTRACTS OF JAPAN vol. 14, no. 260 (P-1056)(4203) 5. Juni 1990 & JP-A-02 071 195

## Beschreibung

Die Erfindung betrifft ein Verfahren und eine Vorrichtung zur Gewinnung einer Probe aus der Atmosphäre in einem gasdicht abgeschlossenen Behälter, insbesondere aus dem Reaktorsicherheitsbehälter eines Kernkraftwerks, wobei die Probe in ein Probenehmergefäß gefüllt wird, und wobei in einem Transportfluid lösbare und/oder kondensierbare Bestandteile der Probe zusammen mit dem Transportfluid und gasförmigen Bestandteilen der Probe aus dem Behälter ausgetragen werden. Ein derartiges Verfahren und eine zu dessen Durchführung geeignete Vorrichtung sind durch die DE-A-39 32 712 bekannt geworden.

Gasdichte Behälter dienen häufig dem Einschluß von Anlagen, in denen Stoffe umgesetzt werden, die nicht in die Behälterumgebung gelangen dürfen. Diese Behälter, auch Containments genannt, sind während des störungsfreien Betriebes der umschlossenen Anlage normalerweise begehbar und gestatten dabei auch eine problemlose Uberwachung der in ihnen vorhandenen Atmosphäre. Beim Auftreten von Störfällen werden diese Behälter jedoch bestimmungsgemäß hermetisch geschlossen, so daß es Schwierigkeiten bereitet, von außen repräsentative Proben der Atmosphäre zu gewinnen.

Bei der Probenahme sind die unterschiedlichen Atmosphärenzustände wie "trocken" und "feucht" sowie das Verhalten der gas- oder dampfförmigen Stoffe und der luftgetragenen festen und flüssigen Aerosole von erheblicher Bedeutung. Insbesondere Effekte, wie die Ablagerungen kondensierender Dämpfe oder großer Aerosole (> 1 µm) in Strömungsrichtung vor einer Probensammeleinrichtung, können eine wesentliche Fehleinschätzung der Zusammensetzung und einer radioaktiven Kontamination der Atmosphäre zur Folge haben.

Bei der eingangs genannten Vorrichtung sind im Zuge einer Rohrschleife hintereinandergeschaltete Probennehmer-Armaturen vorgesehen, deren jede über eine Pneumatik- oder Hydraulik-Leitung ansteuerbar ist. Dabei sind für die Rohrschleife zwei und zusätzlich für jede Pneumatik- oder Hydraulik-Leitung Je eine Durchdringung der Wand des Behälters erforderlich. Da die Festigkeit und Dichtheit des Behälters hierdurch nicht beeinträchtigt werden darf, erfordert dies einen nicht unerheblichen Aufwand. Weiterhin müssen die mechanisch aktiven Probenehmer-Armaturen auch unter und nach Unfallbedingungen, wie Temperaturen über 500 °C und extremen Strahlenbelastungen von über 10KGy/h, betriebsfähig bleiben, so daß extreme Materialanforderungen, insbesondere für die bewegten Teile, zu erfüllen sind.

Der Erfindung liegt daher die Aufgabe zugrunde, ohne Beeinträchtigung der Festigkeit und Dichtheit des Behälters von außen repräsentative Proben der in diesem vorhandenen Atmosphäre zu gewinnen, wobei das Meßergebnis verfälschende Ablagerungen von Probenbestandteilen sicher zu vermeiden sind, und wobei eine Entnahme von Proben mit auch für Störfallbedingungen auslegbaren, vorzugsweise mechanisch passiven, Komponenten ausführbar ist.

Diese Aufgabe wird erfindungsgemäß durch ein Verfahren gelöst, bei dem die Probe sogleich nach ihrem Eintritt in ein Probenehmer-Gefäß durch eine Venturidüse geführt ist, bei dem die Probe in der Venturidüse mit einem als Waschflüssigkeit dienenden Transportfluid gemischt wird, und bei dem danach gasförmige Bestandteile der Probe zusammen mit der Waschflüssigkeit aus dem Probenehmergefäß, initiiert durch plötzliche Druckabsenkung, ausgetragen werden.

Nach einer zweckmäßigen Ausgestaltung der Erfindung wird ein von der Probe vor dem Erreichen der Venturidüse durchströmter Eintrittskanal mit der im Probenehmer-Gefäß befindlichen Waschflüssigkeit vor dem Austragen der Probe gespült.

Eine weitere zweckmäßige Ausgestaltung des erfindungsgemäßen Verfahrens besteht darin, daß die Strömungsgeschwindigkeit der Probe in der oder in den Venturidüsen geringfügig, vorzugsweise um 10 % bis 30 %, unterhalb der kritischen Düsengeschwindigkeit liegt, solange keine Kondensation der Probe in der Waschflüssigkeit eintritt und daß die Strömungsgeschwindigkeit bis auf die kritische Düsengeschwindigkeit angehoben wird, sobald die Probe wenigstens teilweise in der Waschflüssigkeit kondensiert.

Weitere vorteilhafte Ausgestaltungen des erfindungsgemäßen Verfahrens sind in den Unteransprüchen angegeben.

Eine besonders zweckmäßige Vorrichtung zur Gewinnung einer Probe aus der Atmosphäre in einem gasdicht abgeschlossenen Behälter, insbesondere zur Durchführung des Verfahrens nach einem oder mehreren der Ansprüche 1 bis 12, weist erfindungsgemäß in einem Probenehmer-Gefäß über dessen Boden eine in eine Waschflüssigkeit eintauchende Venturidüse auf, enthält ein höchstens etwa zur Hälfte mit Waschflüssigkeit gefülltes Probenehmer-Gefäß und zeichnet sich durch einen unterhalb der Venturidüse in das Probenehmer-Gefäß mündenden Eintrittskanal aus.

Eine zweckmäßige Weiterbildung dieser Vorrichtung besteht darin, daß das Volumen der Waschflüssigkeit geringfügig größer ist als das Volumen eines dem Einlaß der Proben dienenden Eintrittskanals zwischen dessen freiem Ende und dem Boden des Probenehmer-Gefäßes. Eine weitere zweckmäßige Weiterbildung besteht darin, daß die Venturidüse durch als Strömungsverteiler dienende Füllkörper und eine Vielzahl von Düsen im Boden des Probenehmer-Gefäßes ersetzt ist, wobei eine Eintrittsöffnung des Eintrittskanals an dessen freiem Ende während der Normalnutzung des Behälters durch eine Berstscheibe verschlossen ist.

Weitere vorteilhafte Ausgestaltungen der erfindungsgemäßen Vorrichtung sind in den Unteransprüchen gegeben.

Das erfindungsgemäße Verfahren und die erfindungsgemäße Vorrichtung sind sehr vorteilhaft, weil sie die Gewinnung von unverfälschten Proben der Atmosphäre in einem hermetisch verschlossenen Behälter ermöglichen und dazu lediglich eine einzige Durchführung eines Rohres durch die Wand des Behälters erfordern. Dadurch ist eine Beeinträchtigung der Festigkeit und Dichtheit des Behälters nahezu ausgeschlossen. Das gilt auch noch, wenn bei einer direkten Entnahme von Waschflüssigkeit ein zweites Rohr durch die Wandung des Behälters hindurchgeführt ist.

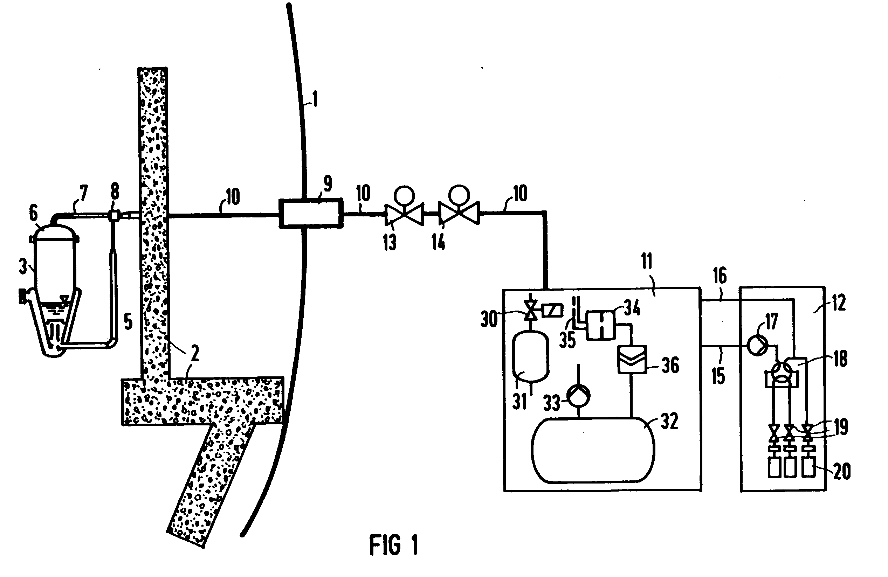

Ausführungsbeispiele der Erfindung werden anhand einer Zeichnung näher erläutert. Es zeigen
Figur 1 ein Schaltschema zur Durchführung des Verfahrens am Reaktorsicherheitsbehälter eines Kernkraftwerkes,
Figuren 2 bis 4 verschiedene Ausführungsformen von zugehörigen Probenehmer-Gefäßen.

Einander entsprechende Bauteile sind in allen Figuren mit gleichen Bezugszeichen versehen.

Ein Reaktorsicherheitsbehälter 1 eines nicht näher dargestellten Kernkraftwerks umfaßt eine ausschnittsweise dargestellte Stahlbetonstruktur 2 und zumindest einen nicht dargestellten Reaktordruckbehälter eines Kernreaktors. Die Stahlbetonstruktur 2 trägt in nicht näher dargestellter Art und Weise ein Probenehmer-Gefäß 3. Dieses ist über eine von dem unmittelbaren Bereich seines Bodens 4 ausgehende Füll- und Entleerungsleitung 5 und eine von seinem Dom 6 ausgehende Gasleitung 7 mit einem Injektor 8 verbunden. Dieser wiederum ist mit einer die Wandung des Reaktorsicherheitsbehälters 1 in einer Durchführung 9 durchdringenden Leitung 10 mit einer Probensortier- und Absauge-Einrichtung 11 verbunden. Die Probensortiereinrichtung 11 dient gleichzeitig der Steuerung des Probenehmer-Gefäßes 3 und der Steuerung einer Probenabfüll- und Verdünnungs-Einrichtung 12. Die Druckdifferenz zwischen der Atmosphäre in dem Behälter und dem Innenraum des Probenehmer-Gefäßes beträgt bis zu 5000 hPa.

Ein Eintrittskanal 26, das Probenehmer-Gefäß 3 mit allen seinen Einbauten, die Füll- und Entleerungsleitung 5, die Gasleitung 7, der Injektor 8 sowie die von diesem ausgehende Leitung 10 bestehen im wesentlichen aus strahlenresistentem Werkstoff, beispielsweise aus Edelstahl.

Zwischen der Durchführung 9 und der Probensortier- und Absauge-Einrichtung 11 sind zwei hintereinandergeschaltete steuerbare Ventile 13 und 14 in die Leitung 10 eingebaut. In der Leitung 10 kann außerdem eine deren Durchsatz begrenzende nicht dargestellte Drossel vorgesehen und ein Sorptionsfilter für Organojod eingeschaltet sein.

Die Probenabfüll- und verdünnungseinrichtung 12 ist über eine Zuleitung 15 und eine Rückleitung 16 mit der Probensortiereinrichtung 11 verbunden und enthält eine Probenförderpumpe 17, einen Verteiler 18 sowie Anschlußarmaturen 19 für eine Vielzahl von Probentransportgefäßen 20. In den Probentransportgefäßen 20 werden die Proben zur genauen Auswertung in ein Untersuchungslabor gebracht. Die Proben werden vor ihrer Auswertung in gasförmige Bestandteile und die weiteren Probenteile enthaltende Waschflüssigkeit 25 getrennt, nachdem die Probenabsaugung über eine dabei im Bereich der Lavalgeschwindigkeit arbeitende Drossel 34 sowie einen Wasserabscheider 36 in einen Unterdruckbehälter 32 erfolgt ist.

Dort erfolgt dann ein Nachweis von Containmentatmosphäre-Radioaktivitäten und/oder deren Zusammensetzung mittels Gaschromatographen und 8/β -Messung. Die Radioaktivitäten können auch kontinuierlich im Abgasteilstrom und im Waschflüssigkeitskreislauf gemessen werden. Das Rückleiten der Gas-und Flüssigkeitsaktivitäten erfolgt in nicht dargestellter Weise, vorteilhaft über das Probenehmer-Gefäß 3, in den Behälter 1.

In der Probensortier- und Absaugeinrichtung 11 sind ein Separator 31, z.B. als Fliehkraftabscheider und Sammler zur Separierung der Waschflüssigkeit, sowie ein schnell öffnendes Ventil 30 untergebracht. In einem Lager- und Absaugebehälter 32 wird über eine Pumpe 33 ein zur Absaugung erforderlicher Unterdruck von weniger als 500 hPa erzeugt und die abgesaugte Waschflüssigkeit 25 gelagert. Eine Drossel 34 wird bei Probeentnahmebetrieb überwiegend mit kritischer Entspannung betrieben, so daß ein konstanter Volumenstrom über den gesamten Betriebsbereich der Probengewinnungsvorrichtung von maximal etwa 10000 hPa bis auf normalen atmosphärischen Druck entnommen wird und zusätzliche Durchsatzregelorgane nicht erforderlich sind.

Über eine Rohrbegleitheizung 35 wird vor der Drossel 34 entstandenes Kondensat wieder verdampft und als Dampf über die Drossel 34 geleitet. eine Füllstandseinstellung und Systemtemperierung erfolgt über nicht dargestellte Medienanschlüsse für Deionat, Dampf und Stickstoff. Bei einer modifizierten Variante ist im System ein eigener (in den Figuren nicht dargestellter) Verdampfer integriert.

Die Waschflüssigkeit 25 im Probenehmer-Gefäß 3 ist, z.B. hinsichtlich pH-Wert von sauer bis alkalisch, variiert, so daß selektiv Elementar- und Organojod zurückgehalten werden. Die Organojod-Rückhaltung ist deshalb auch in einem extern angeordneten Sorptionsfilter 36 möglich. Durch pH-Wert-Variation und anschließende Messung kann weiterhin die Gaszusammensetzung hinsichtlich CO₂, CO etc. sowie mit und ohne Waschflüssigkeit auch die H₂-Konzentration gemessen werden. Das Probenehmer-Gefäß 3 ist an seiner Oberfläche elektropoliert oder tefloniert und in seiner Konstruktion so ausgeführt, daß Ablagerungen weitgehend vermieden werden. Die Meßzeitintervalle können einem Störfallablauf und anderen Ereignissen im Behälter 1 flexibel angepaßt werden. Die Waschflüssigkeit 25 wird nach dem Absaugen aus dem Probenehmer-Gefäß 3 verdünnt bis die Radioaktivität der Probe kleiner als 10⁹ Bq/m³ ist.

Bei Ausführungen als Zweileitungssystem kann die Füll- und Entleerungsleitung 5 des Probenehmergefäßes 3 separat in den Separator 31 in der Sortiereinrichtung 11 geführt sein, so daß ein kontinuierlicher Meßbetrieb und/oder eine Minimierung von Waschflüssigkeit 25 in der Gasleitung 7 erzielt ist.

Das vorgenannte Funktionsprinzip kann auch bei Anordnung eines Probenehmer-Gefäßes 3 direkt nach den Ventilen 13 und 14 inklusive der Rückspülwirkung in einer Einströmleitung unter weitergehender Erhaltung der Verfahrensvorteile realisiert werden, sowie auch als Probenahme- und Meßsystem in Abluftsystemen eingesetzt werden.

Bei Anordnungen von mehreren Probenehmern kann die Gasentnahme über einen Probenehmer und die kontinuierliche Rückpumpung über einen anderen Probenehmer erfolgen.

Durch eine nicht dargestellte, zugehörige, z.B. aus Batterien gespeiste, Versorgung der Elektro- und Leittechnik des Probenehmersystems ist auch im Falle des Stromausfalls die Funktion gewährleistet.

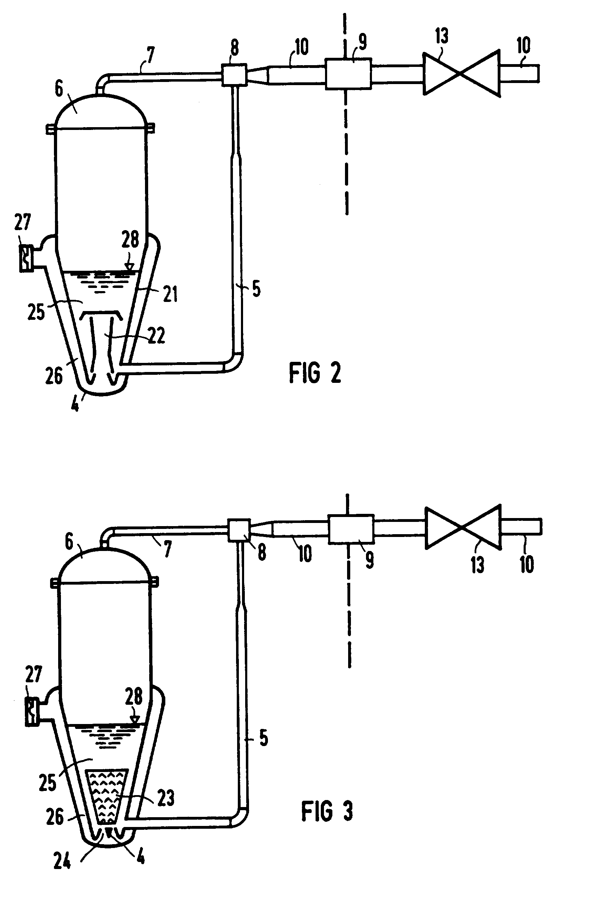

Die Figuren 2 und 3 zeigen ein Probenehmer-Gefäß 3 mit einem sich nach unten verjüngenden, kegelförmigen unteren Teil 21, von dem beim Ausführungsbeispiel gemäß Figur 2 eine Venturidüse 22 und beim Ausführungsbeispiel gemäß Figur 3 ein als Strömungsverteiler 23 dienender Füllkörper sowie eine Vielzahl von Düsen 24 im Boden 4 umfaßt sind. Dieser untere Teil 21 ist mit einem gleichzeitig als Waschflüssigkeit dienenden Transportfluid 25 gefüllt. Am Boden 4 mündet die Füll- und Entleerungsleitung 5 in den unteren Teil 21. Der Dom 6 ist mit Gas gefüllt.

Die Strömungsgeschwindigkeit der Probe in der Venturidüse 22,24, 40 liegt geringfügig, vorzugsweise um 10 % bis 30 %, unterhalb der kritischen Düsengeschwindigkeit, solange keine Kondensation der Probe in der Waschflüssigkeit 25 eintritt. Die Strömungsgeschwindigkeit wird bis auf die kritische Düsengeschwindigkeit angehoben, sobald die Probe wenigstens teilweise in der Waschflüssigkeit 25 kondensiert, wobei das Probenehmer-Gefäß 3 mit den im Behälter 1 herrschenden Druck- und Temperaturbedingungen betrieben wird. Gasförmige Bestandteile der Probe und des Transportfluids können dabei chemisch miteinander reagieren.

Bei den Ausführungsbeispielen nach den Figuren 2 und 3 ist der Teil 21 von einem Eintrittskanal 26 umfaßt, dessen unteres Ende die Venturidüse 22 bzw. die Düsen 24 speist. Sein oberes Ende liegt etwa in Höhe des Uberganges vom Teil 21 in einen zylindrischen Teil des Probenehmer-Gefäßes 3. Das obere Ende des Eintrittskanals 26 ist im Normalbetrieb des Reaktorsicherheitsbehälters 1 durch eine Berstscheibe 27 gasdicht verschlossen.

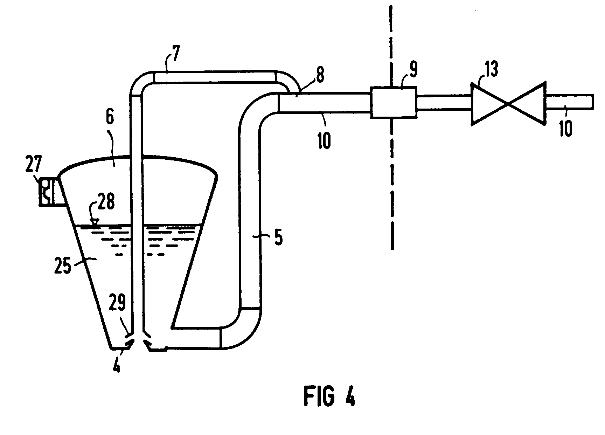

Bei dem Ausführungsbeispiel gemäß Figur 4 durchsetzt die Gasleitung 7 das Probenehmer-Gefäß 3 über dessen gesamte Höhe bis in den Boden 4; sie ist nach unten offen. Dicht über dem Boden 4 sind bei dieser Ausführungsart schlitzartige Öffnungen 29 in der Gasleitung 7 vorgesehen, so daß das untere Ende der Gasleitung 7 im Probenehmer-Gefäß 3 selbst als Venturidüse 40 wirkt. Ein Eintrittskanal in den unteren Teil des Probenehmer-Gefäßes 3 entfällt bei dieser Ausführung. Dafür ist jedoch die Berstscheibe 27 zur Belüftung und Druckentlastung des Probenehmer- Gefäßes 3 unmittelbar an dessen oberem Teil vorgesehen.

In jeden Fall ist in dem Probenehmer-Gefäß 3 über dessen Boden 4 eine in eine Waschflüssigkeit 25 eintauchende Venturidüse 22,24, 40 vorgesehen. Dabei ist das Volumen der Waschflüssigkeit 25 höchstens etwa gleich dem halben Volumen des Probenehmer-Gefäßes 3, das sind etwa 2 bis 3 1 und dabei mündet der Eintrittskanal 26 unterhalb der Venturidüse 22, 24, 40 in das Probenehmer-Gefäß 3.

Das Verfahren zur Gewinnung von Proben aus der Atmosphäre in dem Reaktorsicherheitsbehälter 1 wird durch Befüllen des Probenehmer-Gefäßes 3 über die Leitung 10 und die Füll- und Entleerungsleitung 5 mit Transportfluid 25 eingeleitet. Die Temperatur der Waschflüssigkeit 25 ist zu Beginn einer Probenahme geringfügig niedriger als die der Atmosphäre in dem Behälter 1. Am Ende des Befüllvorgangs wird die Berstscheibe 27 zum Ansprechen gebracht und das Transportfluid hat einen Füllstand 28 erreicht. Anschließend wird der Druck in der Leitung 10 abgesenkt, so daß eine Probe der Atmosphäre aus dem Reaktorsicherheitsbehälter 1 in das Probenehmer-Gefäß 3 einströmt. Die Strömungsgeschwindigkeit der Probe ist durch Drosselung in der Venturidüse 22, 24, 40 und/oder in der außerhalb des Behälters 1 vorgesehenen Drossel 34 konstant. Die Probe wird dabei in der Venturidüse 22 (Fig. 2) oder dem Strömungsverteiler 23 (Fig. 3) oder der Venturidüse 40 aus der Gasleitung 7 und den Öffnungen 29 (Fig. 4) mit dem als Waschflüssigkeit wirkenden Transportfluid 25 gemischt.

Zur Einleitung einer Probengewinnung kann das Probenehmer-Gefäß 3 auch mit Überdruck, beispielsweise durch Einleiten von Stickstoff, beaufschlagt werden, bis eine Berstscheibe 27 am freien Ende des Eintrittskanals 26 bricht.

Bei der Vermischung der Probe mit dem Transportfluid 25 geht ein Teil der Probe in Lösung, ein Teil wird im Transportfluid 25 kondensiert und der Rest bleibt gasförmig und sammelt sich im Dom 6 oder bleibt in Form kleiner Blasen im Transportfluid 25 verteilt. Durch inaktive Jodzusätze und pH-Wert-Variation der Waschflüssigkeit 25 wird auch elementares organisches Jod, CO, CO₂ und anderes Gas aus der Probe in der Waschflüssigkeit 25 zurückgehalten.

Bei Verwendung von Probenehmer-Gefäßen 3 gemäß den Figuren 2 und 3 wird der Eintrittskanal 26 vor dem Abzug des Transportfluids 25 von diesem gespült, indem dieses durch Druckänderungen in der Leitung 10 und dem Probenehmer-Gefäß 3 ein- oder mehrmals bis in Höhe der Berstscheibe 27 gedrückt wird. Dabei wird die Füllstandshöhe 28 der Waschflüssigkeit 25, insbesondere im Eintrittskanal 26, durch Druckänderungen im Transportfluid verändert, wobei die Waschflüssigkeit 25 nach dem Einströmen der Probe mindestens einmal bis in Höhe einer Eintrittsöffnung am freien Ende des Eintrittskanals 26 für die Probe angehoben wird.

Nach ausreichender Spülung des Eintrittskanals 26 wird das einen Teil der Probe enthaltende Transportfluid 25 zusammen mit dem im Dom 26 befindlichen Gasgemisch durch plötzliche Druckabsenkung in der Leitung 10 nach außen bis in die Probensortiereinrichtung 11 befördert.

Die vorbeschriebene Spülung erübrigt sich bei der Ausführung des Probenehmer-Gefäßes 3 gemäß Figur 4, so daß bei dieser Ausführung die plötzliche Druckabsenkung zur Förderung der Probe in die Probensortiereinrichtung 11 unmittelbar nach Wirksamwerden des unteren Endes der Gasleitung 7 als Venturidüse erfolgt.

In jedem Fall wird durch die Leitung 10 ein Gemisch aus Trägergas, gasförmigen Probenbestandteilen und dem ebenfalls Probenbestandteile enthaltenden Transportfluid in die Probensortiereinrichtung 11 gefördert. Dieses Gemisch wird, soweit erforderlich, in der Probensortiereinrichtung 11 aufbereitet und anschließend über die Probenabfülleinrichtung 12 in die Probentransportgefäße 20 gefüllt.

Bei der Anwendung des erfindungsgemäßen Verfahrens ist infolge des sehr kurzen und rückgespülten Eintrittskanals 26 oder wegen des Fehlens eines Eintrittskanals gewährleistet, daß praktisch alle Probebestandteile in dem vorgenannten Gemisch enthalten sind und demzufolge bei der Auswertung der Proben erfaßbar sind.

## Patentansprüche

1. Verfahren zur Gewinnung einer Probe aus der Atmosphäre in einem gasdicht abgeschlossenen Behälter (1), insbesondere aus dem Reaktorsicherheitsbehälter eines Kernkraftwerks,
- wobei die Probe in ein Probenehmer-Gefäß (3) gefüllt wird,
- wobei in einem Transportfluid (25) lösbare und/oder kondensierbare Bestandteile der Probe zusammen mit dem Transportfluid (25) aus dem Behälter (1) ausgetragen werden,
**dadurch gekennzeichnet**,
- daß die Probe sogleich nach ihrem Eintritt in das Probenehmer-Gefäß (3) durch eine Venturidüse (22; 24; 40) geführt ist,
- daß die Probe in der Venturidüse (22; 24; 40) mit dem als Waschflüssigkeit dienenden Transportfluid (25) gemischt wird, und
- daß danach gasförmige Bestandteile der Probe zusammen mit Waschflüssigkeit (25) aus dem Probenehmer-Gefäß (3), initiiert durch eine Druckabsenkung, ausgetragen werden.

2. Verfahren nach Anspruch 1,
**dadurch gekennzeichnet**, daß ein von der Probe vor dem Erreichen der Venturidüse (22; 24; 40) durchströmter Eintrittskanal (26) mit der im Probenehmer-Gefäß (3) befindlichen Waschflüssigkeit (25) vor einer Auswertung der Probe gespült wird.

3. Verfahren nach Anspruch 1 oder 2,
**dadurch gekennzeichnet**, daß die Strömungsgeschwindigkeit der Probe in der Venturidüse (22, 7 mit 29) geringfügig, vorzugsweise um 10 % bis 30 %, unterhalb der kritischen Düsengeschwindigkeit liegt, solange keine Kondensation der Probe in der Waschflüssigkeit (25) eintritt und daß die Strömungsgeschwindigkeit bis auf die kritische Düsengeschwindigkeit angehoben wird, sobald die Probe wenigstens teilweise in der Waschflüssigkeit (25) kondensiert, wobei das Probenehmer-Gefäß (3) mit den im Behälter (1) herrschenden Druck- und Temperaturbedingungen betrieben wird.

4. Verfahren nach einem der Ansprüche 1 bis 3,
**dadurch gekennzeichnet**, daß gasförmige Bestandteile der Probe und des Transportfluids chemisch miteinander reagieren.

5. Verfahren nach einem der Ansprüche 1 bis 4,
**dadurch gekennzeichnet** , daß die Füllstandshöhe (28) der Waschflüssigkeit (25), insbesondere im Eintrittskanal (26), durch Druckänderungen im Transportfluid verändert wird, wobei die Waschflüssigkeit (25) nach dem Einströmen der Probe mindestens einmal bis in Höhe einer Eintrittsöffnung am freien Ende des Eintrittskanals (26) für die Probe angehoben wird.

6. Verfahren nach einem der Ansprüche 1 bis 5,
**dadurch gekennzeichnet**, daß die Druckdifferenz zwischen der Atmosphäre in dem Behälter (1) und dem Innenraum des Probenehmer-Gefäßes (3) bis zu 5000 hPa beträgt.

7. Verfahren nach einem der Ansprüche 1 bis 6,
**dadurch gekennzeichnet**, daß die Temperatur der Waschflüssigkeit (25) zu Beginn einer Probenahme geringfügig niedriger ist als die der Atmosphäre in dem Behälter (1).

8. Verfahren nach einem der Ansprüche 1 bis 7,
**dadurch gekennzeichnet**, daß durch inaktive Jodzusätze und pH-Wert-Variation der Waschflüssigkeit (25) auch elementares organisches Jod, CO, CO₂ und anderes Gas aus der Probe in der Waschflüssigkeit (25) zurückgehalten wird.

9. Verfahren nach einem der Ansprüche 1 bis 8,
**dadurch gekennzeichnet**, daß die Waschflüssigkeit (25) nach dem Absaugen aus dem Probenehmer-Gefäß (3) verdünnt wird, bis die Radioaktivität der Probe kleiner als 10⁹ Bq/m³ ist.

10. Verfahren nach einem der Ansprüche 1 bis 9,
**dadurch gekennzeichnet**, daß die Probe vor ihrer Auswertung in gasförmige Bestandteile und die weiteren Probenteile enthaltende Waschflüssigkeit (25) getrennt wird und daß die Probenabsaugung über eine dabei im Bereich der Lavalgeschwindigkeit arbeitende Drossel (34) sowie einen Wasserabscheider (36) in einen Unterdruckbehälter (32) erfolgt.

11. Verfahren nach einem der Ansprüche 1 bis 10,
**dadurch gekennzeichnet**, daß jede einzelne Probe zum Transport auf eine Vielzahl von Transportbehältern (20) verteilt wird.

12. Verfahren nach einem der Ansprüche 1 bis 11,
**dadurch gekennzeichnet**, daß zur Einleitung einer Probengewinnung das Probenehmer-Gefäß (3) mit Überdruck, beispielsweise durch Einleiten von Stickstoff, beaufschlagt wird, bis eine Berstscheibe (27) am freien Ende des Eintrittskanals (26) bricht.

13. Vorrichtung zur Gewinnung von Proben aus der Atmosphäre in einem gasdicht abgeschlossenen Behälter (1), beispielsweise aus dem Reaktorsicherheitsbehälter eines Kernkraftwerkes, insbesondere zur Durchführung des Verfahrens nach einem oder mehreren der Ansprüche 1 bis 12,
**dadurch gekennzeichnet**,
- daß in einem Probenehmer-Gefäß (3) über dessen Boden (4) eine in eine Waschflüssigkeit (25) eintauchende Venturidüse (22, 7 mit 29) vorgesehen ist,
- daß das Volumen der Waschflüssigkeit (25) höchstens etwa gleich dem halben Volumen des Probenehmer-Gefäßes (3) ist und
- daß der Eintrittskanal (26) unterhalb der Venturidüse (22, 7 mit 29) in das Probenehmer-Gefäß (3) mündet.

14. Vorrichtung nach Anspruch 13,
**dadurch gekennzeichnet**, daß das Volumen der Waschflüssigkeit (25) geringfügig größer ist als das Volumen eines dem Einlaß der Proben dienenden Eintrittskanals (26) zwischen dessen freiem Ende und dem Boden des Probenehmer- Gefäßes (3).

15. Vorrichtung nach Anspruch 14 oder 15,
**dadurch gekennzeichnet**, daß die Venturidüse (22) durch als Strömungsverteiler (23) dienende Füllkörper und eine Vielzahl von Düsen (24) im Boden (4) des Probenehmer-Gefäßes (3) dargestellt ist.

16. Vorrichtung nach einem der Ansprüche 13 bis 15,
**dadurch gekennzeichnet**, daß eine Eintrittsöffnung des Eintrittskanals (26) an dessen freiem Ende während der Normalnutzung des Behälters (1) durch eine Berstscheibe (27) verschlossen ist.

17. Vorrichtung nach einem der Ansprüche 13 bis 16,
**dadurch gekennzeichnet**, daß das Probenehmer-Gefäß (3) an seinem Boden (4) eine Füll- und Entleerungsleitung (5) für die Waschflüssigkeit (25) und in seinem Dom (6) einen Anschluß für eine Gasleitung (7) aufweist.

18. Vorrichtung nach einem der Ansprüche 13 bis 17,
**dadurch gekennzeichnet**, daß die Füll- und Entleerungsleitung (5) neben dem Probenehmer-Gefäß (3) nach oben geführt und seitlich oberhalb des Domes (6) durch einen Injektor (8) mit der Gasleitung (7) verbunden ist.

19. Vorrichtung nach einem der Ansprüche 13 bis 18,
**dadurch gekennzeichnet**, daß das Probenehmer-Gefäß (3) innerhalb des Behälters (1), insbesondere des Reaktorsicherheitsbehälters, angeordnet ist.

20. Vorrichtung nach einem der Ansprüche 13 bis 19,
**dadurch gekennzeichnet**, daß in einer vom Injektor (8) ausgehenden durch die Außenwand des Behälters (1) nach außen geführten Leitung (10) eine den Durchsatz durch diese begrenzende Drossel vorgesehen ist.

21. Vorrichtung nach einem der Ansprüche 13 bis 20,
**dadurch gekennzeichnet**, daß in die Leitung (10) ein Sorptionsfilter für Organojod eingeschaltet ist.

22. Vorrichtung nach einem der Ansprüche 13 bis 21,
**dadurch gekennzeichnet**, daß alle von der Probe berührten Oberflächen, insbesondere im Eintrittskanal (26), poliert oder mit Teflon beschichtet sind.

23. Vorrichtung nach einem der Ansprüche 13 bis 22,
d**dadurch gekennzeichnet**, daß der Eintrittskanal (26), das Probenehmer-Gefäß (3) mit allen seinen Einbauten, die Füll- und Entleerungsleitung (5), die Gasleitung (7), der Injektor (8) sowie die von diesem ausgehende Leitung (10) im wesentlichen aus strahlenresistentem Werkstoff, beispielsweise aus Edelstahl, bestehen.

24. Vorrichtung nach einem der Ansprüche 13 bis 23,
**dadurch gekennzeichnet**, daß das Volumen einer Füllung des Probenehmer-Gefäßes (3) mit der Waschflüssigkeit (25) ca. 2 1 bis 3 1 groß ist.

25. Vorrichtung nach einem der Ansprüche 13 bis 24,
**dadurch gekennzeichnet**, daß die Strömungsgeschwindigkeit der Probe durch Drosselung in der Venturidüse (22, 7 mit 29) und/oder in der außerhalb des Behälters (1) vorgesehenen Drossel (34) konstant ist.

## Claims

1. Process for obtaining a sample from the atmosphere in a closed gastight vessel (1), preferably from the reactor safety vessel of a nuclear power station, the sample being introduced into a sample-taking container (3) and constituents of the sample which are soluble and/ or condensable in a vehicle fluid (25) being discharged from the vessel (1) together with the vehicle fluid (25), characterized in that the sample is passed through a venturi nozzle (22; 24; 40) immediately on its entry into the sample-taking container (3), in that the sample is mixed in the venturi nozzle (22; 24; 40) with the vehicle fluid (25) used as washing liquid, and in that thereafter gaseous constituents of the sample are discharged together with washing liquid (25) from the sample-taking container (3) through triggering by a pressure reduction.

2. Process according to Claim 1, characterized in that an inlet channel (26), through which the sample flows before reaching the venturi nozzle (22; 24; 40), is flushed with the washing liquid (25) contained in the sample-taking container (3) before an assessment of the sample.

3. Process according to Claim 1 or 2, characterized in that the velocity of flow of the sample in the venturi nozzle (22, 7 with 29) is slightly, preferably 10% to 30%, below the critical nozzle velocity, so long as no condensation of the sample occurs in the washing liquid (25), and in that the velocity of flow is increased to the critical nozzle velocity as soon as the sample condenses, at least partially, in the washing liquid (25), the sample-taking container (3) being operated under the conditions of pressure and temperature prevailing in the vessel (1).

4. Process according to one of Claims 1 to 3, characterized in that gaseous constituents of the sample and of the vehicle fluid react chemically with one another.

5. Process according to one of Claims 1 to 4, characterized in that the level height (28) of the washing liquid (25), preferably in the inlet channel (26), is varied by pressure changes in the vehicle fluid, the washing liquid (25) being raised, after the sample has flowed in, at least once to the height of an inlet opening at the free end of the inlet channel (26) for the sample.

6. Process according to one of Claims 1 to 5, characterized in that the difference in pressure between the atmosphere in the vessel (1) and the interior of the sample-taking container (3) amounts to up to 5000 hPa.

7. Process according to one of Claims 1 to 6, characterized in that the temperature of the washing liquid (25) at the beginning of a sample-taking process is slightly lower than that of the atmosphere in the vessel (1).

8. Process according to one of Claims 1 to 7, characterized in that through inactive iodine additions and variation of the pH value of the washing liquid (25), elementary organic iodine, CO, CO₂ and other gas from the sample are also retained in the washing liquid (25).

9. Process according to one of Claims 1 to 8, characterized in that after being drawn off by suction from the sample-taking container (3) the washing liquid (25) is diluted until the radioactivity of the sample is lower than 10⁹ Bq/m³.

10. Process according to one of Claims 1 to 9, characterized in that before its assessment the sample is separated into gaseous constituents and washing liquid (25) which contains the other parts of the sample, and in that the sample is drawn off by suction into a vacuum vessel (32) via a throttle (34) working in the laval velocity range and via a water separator (36).

11. Process according to one of Claims 1 to 10, characterized in that each individual sample is distributed for transport purposes over a plurality of transport containers (20).

12. Process according to one of Claims 1 to 11, characterized in that for the purpose of initiating the obtaining of a sample the sample-taking container (3) is subjected to superatmospheric pressure, for example by introducing nitrogen, until a bursting disc (27) at the free end of the inlet channel (26) breaks.

13. Device for obtaining samples from the atmosphere in a closed gastight vessel (1), for example from the reactor safety vessel of a nuclear power station, preferably for carrying out the process according to one or more of Claims 1 to 12, characterized in that a venturi nozzle (22, 7 with 29) dipping into a washing liquid (25) is provided in a sample-taking container (3), above the bottom (4) of the latter, in that the volume of the washing liquid (25) is at most approximately equal to half the volume of the sample-taking container (3), and in that the inlet channel (26) leads into the sample-taking container (3) below the venturi nozzle (22, 7 with 29).

14. Device according to Claim 13, characterized in that the volume of the washing liquid (25) is slightly greater than the volume of an inlet channel (26), serving for the admission of the samples, between the free end of said channel and the bottom of the sample-taking container (3).

15. Device according to Claim 14 or 15, characterized in that the venturi nozzle (22) is represented by filling bodies, which serve as flow distributors (23), and a plurality of nozzles (24) in the bottom (4) of the sample-taking container (3).

16. Device according to one of Claims 13 to 15, characterized in that an inlet opening of the inlet channel (26) at the free end of the latter is closed by a bursting disc (27) during the normal use of the vessel (1).

17. Device according to one of Claims 13 to 16, characterized in that the sample-taking container (3) has at its bottom (4) a filling and emptying line (5) for the washing liquid (25) and in its dome (6) a connection for a gas line (7).

18. Device according to one of Claims 13 to 17, characterized in that the filling and emptying line (5) is guided upwards at the side of the sample-taking container (3) and is connected laterally above the dome (6) by an injector (8) to the gas line (7).

19. Device according to one of Claims 13 to 18, characterized in that the sample-taking container (3) is arranged inside the vessel (1), preferably inside the reactor safety vessel.

20. Device according to one of Claims 13 to 19, characterized in that in a line (10) starting from the injector (8) and passing to the outside through the outer wall of the vessel (1) a throttle limiting the flow through said line is provided.

21. Device according to one of Claims 13 to 20, characterized in that a sorption filter for organoiodine is inserted into the line (10).

22. Device according to one of Claims 13 to 21, characterized in that all surfaces in contact with the sample, preferably in the inlet channel (26), are polished or coated with teflon.

23. Device according to one of Claims 13 to 22, characterized in that the inlet channel (26), the sample-taking container (3) with all its built-in fittings, the filling and emptying line (5), the gas line (7), the injector (8) and also the line (10) starting from the latter consist essentially of radiation-resistant material, for example special steel.

24. Device according to one of Claims 13 to 23, characterized in that the volume of a filling of the sample-taking container (3) with the washing liquid (25) amounts to about 2 to 3 litres.

25. Device according to one of Claims 13 to 24, characterized in that the velocity of flow of the sample is kept constant by throttling in the venturi nozzle (22, 7 with 29) and/or in the throttle (34) disposed outside the vessel (1).

## Revendications

1. Procédé d'obtention d'un échantillon de l'atmosphère d'une enceinte (1) fermée de façon étanche aux gaz, notamment de l'enceinte de confinement d'un réacteur d'une centrale nucléaire, selon lequel
- on introduit l'échantillon dans un récipient de prise d'échantillon (3),
- on évacue de l'enceinte (1) des constituants de l'échantillon solubles et/ou condensables dans un fluide de transport (25) avec le fluide de transport (25),
caractérisé par le fait
- que, immédiatement après son introduction dans le récipient de prise d'échantillon (3), on fait passer l'échantillon dans un tube de Venturi (22 ; 24 ; 40),
- on mélange l'échantillon dans le tube de Venturi (22 ; 24 ; 40) au fluide de transport (25) servant de liquide de lavage, et
- on évacue ensuite, en faisant baisser la pression, des constituants gazeux de l'échantillon avec du liquide de lavage (25), du récipient de prise d'échantillon (3).

2. Procédé selon la revendication 1,
caractérisé par le fait qu'avant l'analyse de l'échantillon, on rince un canal d'admission (26) dans lequel passe l'échantillon avant d'atteindre le tube de Venturi (22 ; 24 ; 40) avec le liquide de lavage (25) se trouvant dans le récipient de prise d'échantillon (3).

3. Procédé selon la revendication 1 ou 2,
caractérisé par le fait que, aussi longtemps qu'il n'y a pas de condensation de l'échantillon dans le liquide de lavage (25), la vitesse de circulation de l'échantillon dans le tube de Venturi (22, 7 avec 29) est légèrement inférieure à la vitesse critique dans le tube, de préférence de 10 % à 30 %, et on porte la vitesse de circulation à la vitesse critique dans le tube dès que l'échantillon se condense, au moins partiellement, dans le liquide de lavage (25), le récipient de prise d'échantillon (3) fonctionnant aux conditions de température et de pression régnant dans l'enceinte (1).

4. Procédé selon l'une quelconque des revendications 1 à 3,
caractérisé par le fait que des constituants gazeux de l'échantillon et du fluide de transport réagissent chimiquement entre eux.

5. Procédé selon l'une quelconque des revendications 1 à 4,
caractérisé par le fait que l'on modifie le niveau de remplissage (28) du liquide de lavage (25), notamment dans le canal d'admission (26), par des variations de pression dans le fluide de transport, le niveau du liquide de lavage (25) étant augmenté au moins une fois après l'introduction de l'échantillon jusqu'à hauteur d'un orifice d'admission pour l'échantillon situé à l'extrémité libre du canal d'admission (26).

6. Procédé selon l'une quelconque des revendications 1 à 5,
caractérisé par le fait que la différence de pression entre l'atmosphère régnant dans l'enceinte (1) et l'espace intérieur du récipient de prise d'échantillon (3) peut aller jusqu'à 5000 hPa.

7. Procédé selon l'une quelconque des revendications 1 à 6,
caractérisé par le fait qu'au début d'un prélèvement d'échantillon la température du liquide de lavage (25) est légèrement inférieure à celle de l'atmosphère régnant dans l'enceinte (1).

8. Procédé selon l'une quelconque des revendications 1 à 7,
caractérisé par le fait que par des additions inactives d'iode et par des variations de la valeur du pH du liquide de lavage (25), on retient de l'iode organique élémentaire, du CO, du CO₂ et d'autres gaz contenus dans l'échantillon dans le liquide de lavage (25).

9. Procédé selon l'une quelconque des revendications 1 à 8,
caractérisé par le fait que, après avoir aspiré le liquide (25) de lavage du récipient de prise d'échantillon (3), on le dilue jusqu'à ce que la radioactivité de l'échantillon soit inférieure à 10⁹ Bq/m³.

10. Procédé selon l'une quelconque des revendications 1 à 9,
caractérisé par le fait que, avant son analyse, on sépare l'échantillon en constituants gazeux et en liquide (25) de levage contenant les autres constituants de l'échantillon, et on aspire l'échantillon dans un réservoir en dépression (32) par l'intermédiaire d'un étranglement (34) fonctionnant à cet effet dans la plage de vitesse de Laval ainsi que d'un séparateur d'eau (36).

11. Procédé selon l'une quelconque des revendications 1 à 10,
caractérisé par le fait que l'on répartit chaque échantillon pour le transport dans une pluralité de récipients de transport (20).

12. Procédé selon l'une quelconque des revendications 1 à 11,
caractérisé par le fait que, pour faire débuter une obtention d'échantillon, on met le récipient de prise d'échantillon (3) en surpression, par exemple par l'admission d'azote, jusqu'à l'éclatement d'un disque de rupture (27) disposé sur l'extrémité libre du canal d'admission (26).

13. Dispositif d'obtention d'échantillons de l'atmosphère d'une enceinte (1) fermée de façon étanche aux gaz, par exemple de l'enceinte de confinement du réacteur d'une centrale nucléaire, destiné notamment à la mise en oeuvre du procédé selon l'une ou plusieurs des revendications 1 à 12,
caractérisé par le fait
- qu'un tube de Venturi (22, 7 avec 29) plongeant dans un liquide de lavage (25) est prévu au-dessus du fond (4) d'un récipient de prise d'échantillon (3),
- que le volume du liquide de lavage (25) est au plus égal à la moitié environ du volume du récipient de prise d'échantillon (3), et
- que le canal d'admission (26) débouche dans le récipient de prise d'échantillon (3) en dessous du tube de Venturi (22, 7 avec 29).

14. Dispositif selon la revendication 13,
caractérisé par le fait que le volume du liquide de lavage (25) est légèrement supérieur au volume d'un canal d'admission (26) servant à l'introduction des échantillons entre l'extrémité libre de ce dernier et le fond du récipient de prise d'échantillon (3).

15. Dispositif selon la revendication 13 ou 14,
caractérisé par le fait que le tube de Venturi (22) est constitué de corps de remplissage servant de répartiteurs de circulation (23) et d'une pluralité de buses (24) dans le fond (4) du récipient de prise d'échantillon (3).

16. Dispositif selon l'une quelconque des revendications 13 à 15,
caractérisé par le fait qu'un orifice d'admission, prévu sur l'extrémité libre du canal d'admission (26), est obturé par un disque de rupture (27) pendant l'utilisation normale de l'enceinte (1).

17. Dispositif selon l'une quelconque des revendications 13 à 16,
caractérisé par le fait que le récipient de prise d'échantillon (3) comporte au niveau de son fond (4) une conduite de remplissage et de vidange (5) pour le liquide de lavage (25), et au niveau de son dôme (6) un raccordement pour une conduite de gaz (7).

18. Dispositif selon l'une quelconque des revendications 13 à 17,
caractérisé par le fait que la conduite de remplissage et de vidange (5) est dirigée vers le haut à côté du récipient de prise d'échantillon (3), et qu'elle est reliée à la conduite de gaz (7) par un injecteur (8) latéralement au-dessus du dôme (6).

19. Dispositif selon l'une quelconque des revendications 13 à 18,
caractérisé par le fait que le récipient de prise d'échantillon (3) est disposé dans l'enceinte (1), notamment dans l'enceinte de confinement du réacteur.

20. Dispositif selon l'une quelconque des revendications 13 à 19,
caractérisé par le fait qu'il est prévu un étranglement limitant le débit dans une conduite (10), qui part de l'injecteur (8) et est dirigée vers l'extérieur en traversant la paroi extérieure de l'enceinte (1).

21. Dispositif selon l'une quelconque des revendications 13 à 20,
caractérisé par le fait qu'un filtre de sorption pour de l'iode organique est inséré dans la conduite (10).

22. Dispositif selon l'une quelconque des revendications 13 à 21,
caractérisé par le fait que toutes les surfaces entrant en contact avec l'échantillon, notamment dans le canal d'admission (26), sont polies ou revêtues de Téflon.

23. Dispositif selon l'une quelconque des revendications 13 à 22,
caractérisé par le fait que le canal d'admission (26), le récipient de prise d'échantillon (3) avec toutes ses pièces rapportées, la conduite de remplissage et de vidange (5), la conduite de gaz (7), l'injecteur (8), ainsi que la conduite (10) partant de ce dernier, sont réalisés pour l'essentiel en un matériau résistant aux radiations, par exemple en acier fin.

24. Dispositif selon l'une quelconque des revendications 13 à 23,
caractérisé par le fait que le volume d'un remplissage en liquide de lavage (25) du récipient de prise d'échantillon (3) est de l'ordre de 2 l à 3 l.

25. Dispositif selon l'une quelconque des revendications 13 à 24,
caractérisé par le fait que, par l'étranglement prévu dans le tube de Venturi (22, 7 avec 29) et/ou dans l'étranglement (34) prévu en dehors de l'enceinte (1), la vitesse de circulation de l'échantillon est constante.
